(19) Europäisches Patentamt
European Patent Office
Office européen des brevets

(11) EP 1 975 219 B1

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(51) Int Cl.:
***C09K 5/16*** *(2006.01)* ***B60H 1/00*** *(2006.01)*
***F24D 11/00*** *(2006.01)* ***F28D 20/00*** *(2006.01)*

(21) Anmeldenummer: **08004531.3**

(22) Anmeldetag: **12.03.2008**

(54) **Thermochemischer Wärmespeicher und Heizsystem mit einem thermochemischen Wärmespeicher**

Thermochemical heat reservoir and heating system with a thermochemical heat reservoir

Accumulateur thermochimique et système de chauffage doté d'un accumulateur thermochimique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.03.2007 DE 102007014846**

(43) Veröffentlichungstag der Anmeldung:
**01.10.2008 Patentblatt 2008/40**

(73) Patentinhaber: **Robert Bosch GmbH**
**70442 Stuttgart (DE)**

(72) Erfinder: **Barunovic, Robert**
**64404 Bickenbach (DE)**

(56) Entgegenhaltungen:
**EP-A1- 0 810 410** **WO-A1-2007/000170**
**FR-A1- 2 705 622** **US-A- 4 319 626**
**US-A- 4 365 475** **US-A- 4 713 944**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft einen thermochemischen Wärmespeicher nach dem Oberbegriff des Anspruches 1. Weiter betrifft die Erfindung ein Heizsystem mit einem thermochemischen Wärmespeicher nach dem Oberbegriff des Anspruchs 9. Nicht zuletzt betrifft die Erfindung eine Verwendung eines Heizsystems nach Anspruch 15 und/oder 16.

Stand der Technik

Allgemein bekannt sind thermochemische Wärmespeicher. Diese speichern eingespeiste Wärme durch eine endotherme Reaktion und geben gespeicherte Wärme durch eine exotherme Reaktion der in dem Wärmespeicher vorhandenen Reaktionsteilnehmer ab. Die thermochemischen Wärmespeicher gemäß dem Stand der Technik sind als Metallhydridspeicher ausgebildet, welche mit Wasserstoff als ein wesentlicher Wärmeträger arbeiten.

Nachteil an der Verwendung von Wasserstoff in einem thermochemischen Wärmespeicher ist zum einen, dass dessen Wärmekapazität zu gering ist für die gewünschten Anforderungen. Zum anderen ist der Aufwand zum Speichern des Wasserstoffs sehr hoch, da der Wasserstoff auf sehr hohe Drücke komprimiert werden muss, um eine optimierte Speicherdichte zu erhalten.

Die FR 2705622 A1 offenbart ein Verfahren zum Heizen eines Fahrgastraums eines Kraftfahrzeuges unter Verwendung von Wärme aus einem Reaktor, wobei ein reaktives Gas mit einem reaktiven Feststoff reversibel in einer exothermen Reaktion reagiert. Das Reaktionsgas wird in der Quelle für reaktives Gas hergestellt und zumindest ein Teil der Wärme durch die Reaktionsgasquelle absorbiert und dem Reaktor über einen Wärmetauscher zugeführt. Durch eine externe Energiequelle kann der reaktive Feststoff wieder regeneriert werden und zur Vorwärmung des Fahrzeuginnenraums dienen.

Der Erfindung liegt die Aufgabe zugrunde, einen einfach aufgebauten thermochemischen Wärmespeicher und ein Heizsystem mit einem thermochemischen Wärmespeicher mit einer erhöhten Wärmekapazität zu schaffen. Weiter liegt der Erfindung die Aufgabe zugrunde, ein verbessertes Heizsystem für verschiedene Anwendungen wie eine Kraftfahrzeug-Standheizung und/oder eine Gebäudeheizung zu schaffen. Erfindungsgemäß wird dies mit den Merkmalen des Anspruches 1, 9, 15 und 16 gelöst. Vorteilhafte Weiterbildungen sind den Unteransprüchen zu entnehmen.

Der thermochemische Wärmespeicher, mit einer in einem ersten Behältnis befindlichen ersten Verbindung oder Substanz, insbesondere eine erste chemische Verbindung, und mit einer in einem zweiten Behältnis befindlichen zweiten Substanz, insbesondere eine zweite chemische Verbindung, wobei durch eine exotherme Reaktion der ersten Substanz mit der zweiten Substanz unter Bildung einer dritten Substanz, insbesondere einer dritten chemischen Verbindung, Wärmeenergie freisetzbar ist und wobei durch Einbringen von Wärmeenergie in die dritte Substanz durch eine endotherme Reaktion die erste und die zweite Substanz reversibel herstellbar sind, ist dadurch gekennzeichnet, dass die erste Substanz ein Nitrid mindestens eines Elements der ersten und/oder zweiten Hauptgruppe des Periodensystems ist und die zweite Substanz Ammoniak ($NH_3$) umfasst.

Als Verbindung, insbesondere chemische Verbindung werden im Zusammenhang mit dieser Erfindung Substanzen bezeichnet, die aus zwei oder mehr verschiedenen chemischen Elementen bestehen, die in einem festen Atomverhältnis zueinander stehen. Substanzen können weiter auch als Gemische, Lösungen und/oder Legierungen vorliegen. Die Begriffe Verbindung und Substanz werden hier synonym verwendet.

Der thermochemische Wärmespeicher umfasst im Wesentlichen ein erstes Behältnis und ein zweites Behältnis, welche über mindestens eine Leitung miteinander fluidisch verbunden sind. In dem ersten Behältnis befindet sich ein Feststoff und/oder ein Gas (Nitrid). In dem zweiten Behältnis befindet sich Ammoniak ($NH_3$). Das Ammoniak bildet den wesentlichen Wärmeträger.

Um Wärme zu speichern wird von außen gewonnene Wärme in das erste Behältnis transportiert. Dort findet eine endotherme Reaktion der in dem ersten Behältnis befindlichen dritten Substanz statt, wobei unter anderem Ammoniak und eine erste Substanz bzw. Verbindung freigesetzt werden. Das frei werdende Ammoniak wird über ein Leitungssystem in das zweite Behältnis geleitet und dort gespeichert.

Um die so gespeicherte Wärme abzugeben, wird das Ammoniak von dem zweiten Behältnis in das erste Behältnis geleitet. Dort reagiert das Ammoniak mit der ersten Verbindung exotherm. Die hierbei frei werdende Wärme wird nach außen abgegeben.

Die erste Verbindung kann in einem Ausführungsbeispiel Magnesiumnitrid ($Mg_3N_2$), eine Magnesiumnitridverbindung oder ein Feststoff oder Gas mit ähnlichen Eigenschaften in Bezug auf die Reaktion mit Ammoniak sein, wie Magnesiumnitrid. Hierfür kommen beispielsweise die Nitride mindestens eines Elements der ersten und/oder zweiten Hauptgruppe des Periodensystems in Frage.

Die zweite Verbindung umfasst Ammoniak ($NH_3$).

Die dritte Verbindung kann in einem Ausführungsbeispiel Magnesiumamid ($Mg(NH_2)_2$), eine Magnesiumamidverbindung oder ein Feststoff oder Gas mit ähnlichen Eigenschaften in Bezug auf die Reaktion mit Ammoniak sein, wie Magnesiumamid. Hierfür kommen beispielsweise die Amide mindestens eines Elements der ersten und/oder zweiten

Hauptgruppe des Periodensystems in Frage. Mit diesen Verbindungen sind die wesentlichen Reaktionen für den thermochemischen Speicher wie folgt:

Magnesiumnitrid reagiert mit Ammoniak exotherm unter der Bildung von Magnesiumamid. Erwärmt man das Magnesiumamid auf eine bestimmte Temperatur, reagiert dieses unter Bildung von Ammoniak und Magnesiumnitrid.

Als Reaktionsgleichung geschrieben, sehen die beiden wesentlichen Reaktionen wie folgt aus:

$$\text{Reaktion 1: } \frac{1}{4}Mg_3N_2 + NH_3 \xrightarrow{exotherm} \frac{3}{4}Mg(NH_2)_2 + Wärme$$

und

$$\text{Reaktion 2: } \frac{3}{4}Mg(NH_2)_2 + Wärme \xrightarrow{endotherm} \frac{1}{4}Mg_3N_2 + NH_3.$$

Die Standardbildungsenthalpien der Produkte bzw. Edukte sind (siehe hierzu "Hydrogen Release from Mg(NH2)2-MgH2 through Mechanochemical Reaction" - Hu, J.; Wu, G.; Liu, Y.; Xiong, Z.; Chen, P.; Murata, K.; Sakata, K.; Wolf, G.; J. Phys. Chem. B.; (Article); 2006; 110(30); 14688-14692. DOI: 10.1021/jp061279 und http://webbook.nist.gov/chemistry/).

$\Delta H^{standard}$□ □$Mg(NH_2)_2$=-325 □kJ/mol

$\Delta H^{standard}$□□ $Mg_3N_2$□ = - 491,08 kJ/mol

$\Delta H^{standard}$ □ □$NH_3$ = - 45,9 kJ/mol

Die Standardentropien der Produkte bzw. Edukte sind:

$\Delta H^{standard}$□ $Mg(NH_2)_2$ = ca. 65 □J/(mol.K)

$\Delta S^{standard}$ □□$Mg_3N_2$ = 87,9 J/(mol.K)

$\Delta S^{standard}$□□ $NH_3$ = 192 J/(mol.K)

Die Entropie für Mg(NH2) ist unbekannt und wurde auf 65 J/(mol.K) geschätzt. Diese Entropie ist etwa die Entropie von Magnesium-Hydroxid ($Mg(OH)_2$), einer chemischen Substanz, die dem Magnesiumamid strukturell ähnelt.

Die Standardreaktionsenthalpie und die Standardreaktionsentropie berechnen sich wie folgt:

$$\Delta H(Reaktion1) = \frac{3}{4}\cdot(-325kJ/mol) - \frac{1}{4}(-461{,}08kJ/mol) - (-45{,}9kJ/mol) = -82{,}58kJ/mol$$

$$\Delta S(Reaktion1) = \frac{3}{4}\cdot(65J/(mol.K)) - \frac{1}{4}(87{,}9J/(mol.K)) - (192J/(mol.K)) \approx -166J/(mol.K)$$

Pro mol NH3 wird also eine Energiemenge von 82,58 kJ frei.

Die Molmasse von $NH_3$ beträgt 17 g/mol, die Dichte von flüssigem $NH_3$ beträgt 610 kg/$m^3$ (bei 20°C und 8,5 bar).

Die "Wärmekapazität" pro Gewichtseinheit beträgt also:

$$\frac{E}{V} = \frac{82{,}58kJ/mol}{17g/mol}\cdot\frac{1000g}{kg} = 4858kJ/kg$$

Das ergibt eine "Wärmekapazität" (pro Volumen) von:

$$\frac{E}{V} = \frac{82{,}58kJ/mol}{17g/mol}\cdot\frac{1000g}{kg}\cdot\frac{610kg}{m^3} = 2963164kJ/m^3$$

Diese "Wärmekapazität" lässt sich auch in der Einheit kWh/$m^3$ bzw. kWh/kg ausdrücken (1kWh = 3600kJ):

- 4858kJ/kg=1,4kWh/kg
- 2963164 kJ/$m^3$ = 823 kWh/$m^3$

Die Temperatur, auf die das Magnesiumamid erwärmt werden muss, um Reaktion 2 ablaufen zu lassen, lässt sich mit der Gibbs Energie abschätzen. Wird diese Null ist die Reaktion im Gleichgewicht:
Es gilt:

$$\Delta G = \Delta H - T\Delta S = 0$$

daraus folgt:

$$T_{Gleichgewicht} = \frac{\Delta H}{\Delta S} = \frac{82580 J/mol}{166 J/(mol.K)} = 497K \approx 225°C$$

Man muss das Magnesiumamid also auf ca. 225°C erwärmen, um einen Ammoniakdruck von 1 bar zu erhalten. Die Temperatur, um Reaktion 2 ablaufen zu lassen, kann gesenkt werden, indem das Ammoniak abgepumpt wird, so dass der Gleichgewichtsdruck auf unter 1 bar reduziert wird.
Verdichtet man das Ammoniak auf p=8,5 bar, so ändert sich die Gleichgewichtsgleichung zu:

$$\Delta G = \Delta H - T\Delta S - nRT \cdot \ln\left(\frac{p}{p^*}\right) = 0$$

mit

R: Ideale Gaskonstante (8,314 J/mol.K)
n: Gasmenge in mol
p*: Standarddruck (~1dar)

daraus folgt:

$$T_{Gleichgewicht} = \frac{\Delta H}{\Delta S - nRT \cdot \ln\left(\frac{p}{p^*}\right)} = \frac{82580 J/mol}{166 J/(mol.K) - 1mol \cdot 8{,}314 \frac{J}{mol \cdot K} \cdot \ln\left(\frac{8{,}5bar}{1bar}\right)} = 557K \approx 284°C$$

Man muss das Magnesiumamid also auf ca. 284°C erwärmen, um einen Ammoniakdruck von 8,5 bar zu erhalten.
In einem Ausführungsbeispiel ist somit vorgesehen, dass die erste Verbindung Magnesiumnitrid ($Mg_3N_2$) ist. Hierunter fallen auch alle Magnesiumnitridverbindungen oder Magnesiumnitrid-ähnlichen Stoffe und/oder -Verbindungen, welche die gleichen oder ähnliche Eigenschaften wie Magnesiumnitrid in Bezug auf die vorbeschriebenen Reaktionen aufweisen, insbesondere Verbindungen, die dem Magnesiumnitrid strukturell ähnlich sind.
Gemäß einem weiteren Ausführungsbeispiel ist vorgesehen, dass das erste Behältnis für die exotherme und die endotherme Reaktion vorgesehen ist. Entsprechend weist das erste Behältnis Eigenschaften, insbesondere hinsichtlich Festigkeit, Volumen, Material etc., auf, die eine exotherme und/oder endotherme Reaktion der ersten, zweiten und/oder dritten Verbindung ermöglichen.
Entsprechend ist in einer Ausgestaltung der Erfindung vorgesehen, dass das erste Behältnis ein Feststofftank ist. Der Feststofftank ist ausreichend dicht und stabil ausgebildet und weist ein Volumen auf, welches für eine entsprechende endotherme und/oder exotherme Reaktion ausreichend bemessen ist. Die Wandungen des Feststofftanks sind ausreichend dick konzipiert und aus einem geeigneten Material gefertigt.
Zur Aufnahme des Ammoniaks, welches in einem gasförmigen Zustand vorliegt oder vorliegen kann, ist vorgesehen, dass das zweite Behältnis ein Drucktank ist. Der Drucktank, oder auch Druckbehälter genannt, ist entsprechend ausgebildet, um ausreichend Ammoniak für einen bedarfsgerechten thermochemischen Speicher aufzunehmen. Dazu weist der Drucktank ein entsprechendes Volumen mit einer ausreichend bemessenen Wandung aus, um beispielsweise

gasförmiges Ammoniak bei einem Druck in einem Bereich von etwa 1 bar bis etwa 50 bar, bevorzugt von etwa 1 bar bis etwa 25 bar und am meisten bevorzugt bei etwa 8,5 bar in einem Temperaturbereich von etwa 10°C bis 100°C, bevorzugt von etwa 15°C bis etwa 50°C und am meisten bevorzugt von etwa 20°C aufzunehmen. Der Drucktank weist eine entsprechende Dichtigkeit auf, so dass kein oder nahezu kein Ammoniak ungewollt entweichen kann. Insbesondere erfüllt der Drucktank alle gängigen Sicherheitsbestimmungen.

Um das Ammoniak von dem einen der Behältnisse in das andere der Behältnisse zu fördern, insbesondere von dem ersten Behältnis in das zweite Behältnis, ist vorgesehen, dass zwischen dem ersten Behältnis und dem zweiten Behältnis wenigstens eine Fördereinrichtung vorgesehen ist. Die Behältnisse sind über mindestens eine Leitung oder ein Leitungssystem fluidisch verbunden. Zwischengeschaltet zwischen den beiden Behältnissen ist zur Förderung eine Fördereinrichtung, beispielsweise in Form eines Verdichters, einer Pumpe, einer Kombination aus Pumpe und Verdichter oder dergleichen. Über die Fördereinrichtung wird zum einen das Ammoniak von dem ersten Behältnis in das zweite Behältnis gefördert. Zum anderen wird bei dem Fördern des Ammoniaks dieses gleichzeitig verdichtet, beispielsweise auf einen Druck von etwa 8,5 bar. Die Fördereinrichtung kann eine Heizeinrichtung umfassen, welche das Ammoniak auf eine vorgegebene Temperatur, beispielsweise etwa 20°C, temperiert. Die Fördereinrichtung fördert das Ammoniak zumindest in eine Richtung. Die Fördereinrichtung kann für eine bidirektionale Förderung ausgebildet sein. Alternativ kann das Ammoniak von dem zweiten Behältnis in das erste Behältnis aufgrund der Druckdifferenz zwischen den Behältnissen einfach über das Leitungssystem geleitet werden. Um ein Rückfließen zu steuern, können in dem Leitungssystem entsprechende Ventile oder Ventileinrichtungen vorgesehen sein. Diese können als Rückstoßventile, Sicherheitsventile, Überdruckventile und dergleichen ausgebildet sein.

Um eine ausreichend gute Speicherdichte des Ammoniaks zu gewährleisten, ist in einer Ausgestaltung der Erfindung vorgesehen, dass die Fördereinrichtung eine Verdichterpumpe ist. Auf diese Weise lässt sich das Ammoniak beim Fördern komprimieren und somit lässt sich das komprimierte Ammoniak in einem geringeren Volumen anordnen.

In einer weiteren Ausführung der Erfindung ist an und/oder in dem ersten Behältnis wenigstens ein Wärmetauscher vorgesehen, welcher derart ausgebildet ist, dass er zum Entnehmen von Wärmeenergie aus dem Speicher in dem ersten Behältnis entstehende Wärmeenergie nach außen abgibt und/oder er zum Speichern von Wärmeenergie in dem Speicher außerhalb entstehende Wärmeenergie durch Aufnahme von Strahlungs- oder Konvektionswärme in den ersten Behältnis einbringt. Der Wärmetauscher ist dabei so ausgelegt, dass er eine ausreichende Wärmeenergie aufbringt, um die entsprechenden Reaktionen in Gang zu setzen. Der Wärmetauscher weist ein entsprechendes Medium auf, welches für einen Wärmetransport geeignet ist. Vorzugsweise ist das Medium ein Fluid, beispielsweise Wasser.

Das Heizsystem ist durch einen erfindungsgemäßen thermochemischen Wärmespeicher nach einem der Ansprüche 1 bis 8 gekennzeichnet. Dabei ist der thermochemischer Wärmespeicher so ausgelegt, dass ausreichend Wärme gespeichert und abgegeben werden kann, je nach Bedarf und/oder Einsatzgebiet.

In einer Ausführungsform ist vorgesehen, dass der Wärmetauscher zum Abführen der Wärmeenergie aus dem ersten Behältnis mit wenigstens einer Energieabgabeeinrichtung verbunden und/oder verbindbar ist. Die Energieabgabeeinrichtung kann beispielsweise eine Heizung, eine Standheizung, beispielsweise eines Kraftfahrzeugs oder dergleichen sein. Die Energieabgabeeinrichtung kann örtlich verteilt sein oder eine zentrale Energieabgabeeinrichtung sein.

In einer bevorzugten Ausführung ist die Energieabgabeeinrichtung ein Heizkörper. Der Heizkörper kann ein Flachheizkörper, ein gerippter Heizkörper, ein Heizkörper aus Stahlrohr wie ein Handtuchtrockner, ein Fußbodenheizkörper, ein Wandheizkörper oder dergleichen sein.

Um den thermochemischen Wärmespeicher mit externer Wärme zu speisen ist vorgesehen, dass der Wärmetauscher zum Einbringen von Wärmeenergie in das erste Behältnis mit einer externen Energiequelle verbunden und/oder verbindbar ist. Die externe Energiequelle kann beispielsweise eine Solaranlage, eine Wärmepumpe, ein Abgasstrang oder dergleichen sein. Über diese externen Energiequellen lässt sich über ein entsprechendes Medium externe Wärme in den thermochemischen Wärmespeicher speisen, wobei die Wärme jederzeit wieder abrufbar ist.

In einer besonderen Ausführungsform ist vorgesehen, dass die externe Energiequelle ein Solarkollektor ist. Der Solarkollektor, als Bestandteil der Solaranlage, gewinnt Wärme aus der Sonnenstrahlung. Dabei sammelt und absorbiert er die im Sonnenlicht enthaltende Energie. Über einen Absorber wird die Lichtenergie der Sonne in Wärme umgewandelt und diese an ein den Absorber durchströmendes Medium, einen Wärmeträger, abgegeben. Der Solarkollektor kann als Flachkollektor, als Vakuumröhrenkollektor, als Niedertemperatur-Kollektor oder dergleichen ausgebildet sein.

In einer anderen Ausführungsform ist die externe Energiequelle eine Abgasleitung, beispielsweise eines Kraftfahrzeugs. Hierbei wird die Abgaswärme, die in der Regel nicht mehr verwendet wird, in den thermochemischen Wärmespeicher gespeist. Die gespeicherte Wärme kann beispielsweise an die Fahrgastzelle und/oder den Motor abgegeben werden, zum Beispiel auch an eine Standheizung.

Die Erfindung ist weiter durch eine Verwendung eines erfindungsgemäßen Heizsystems nach einem der Ansprüche 9 bis 14 in einer Gebäudeheizung gekennzeichnet. Je nach Bemessung des thermochemischen Wärmespeichers kann das Gebäude ein Ein- oder ein Mehrfamilienhaus oder ein größeres Gebäude sein.

Zudem ist die Erfindung durch eine Verwendung eines erfindungsgemäßen Heizsystems nach einem der Ansprüche 9 bis 14 in einer Standheizung für ein Kraftfahrzeug gekennzeichnet. Dabei wird Abwärme, beispielsweise eines Abgasstrangs für die Standheizung verwendet. Eine weitere Ausführungsform sieht die Verwendung als Motorheizeinrichtung vor.

Mit dem erfindungsgemäßen thermochemischen Wärmespeicher bzw. dem Heizsystem und den Anwendungen lassen sich höhere Wärmekapazitäten im Vergleich zu herkömmlichen Wärmeträgern wie beispielsweise Heizöl erreichen. Insbesondere lässt sich auch geringe Restwärme noch effektiv nutzen.

Zum Vergleich mit Heizöl gibt die folgende Beschreibung die Vorteile deutlich wieder.

1m$^3$ Heizöl enthält ca. 10.000 kWh an Energie und hat eine Dichte von 860 kg/m$^3$. Dies ergibt eine "Wärmekapazität" von 10.000 kWh/m$^3$ bzw. 11,6 kWh/kg.

Um die Wärmemenge, die in einer bestimmten Menge Heizöl gespeichert ist, in dem oben genannten thermochemischen Wärmespeicher gemäß der Erfindung zu speichern, benötigt man also ca. 8,3-mal mehr Brennstoffgewicht und ca. 12,1-mal mehr Brennstoffvolumen.

Da die Reaktion reversibel ist, wird der "Brennstoff" nicht wirklich verbraucht sondern kann durch Erwärmen zurück gewonnen werden. Bei der Wärmeerzeugung werden keine Treibhausgase frei. Das System muss nicht betankt werden, weshalb es sich besonders für den Einsatz in entlegenen Gebieten eignet.

Ein Niedrigenergiehaus verbraucht im Jahr ca. 7.000 kWh an Wärmeenergie. Um diese Energie bereitzustellen wäre ein Tank mit einem Gewicht von 5 Tonnen und einem Volumen von 9 m$^3$ nötig. Dies entspräche einem Druckzylinder für den thermochemischen Wärmespeicher mit einem Durchmesser von ca. 2 m und einer Länge von ca. 3 m.

Mit der vorliegenden Erfindung kann eine deutliche Erhöhung der Wärmekapazität erzielt werden. Bisher beträgt die Wärmekapazität, die mit herkömmlichen thermochemischen Wärmespeichern erreicht werden kann (Wärme die pro Volumen bzw. Gewichtseinheit gespeichert werden kann) ca. 250 kWh/m$^3$ (praktisch in Pilotanlagen erreichbar: ca. 130 kWh/m$^3$).

Es lassen sich die für den erfindungsgemäßen thermochemischen Wärmespeicher benötigten Materialien großtechnisch kostengünstig herstellen. Im Gegensatz zu Metallhydridspeichern, die mit Wasserstoff arbeiten kann das hier verwendete Gas (Ammoniak) besser gespeichert werden, da es bei 20°C und 8,5 bar Druck in den flüssigen Zustand über geht, wobei dessen Dichte sprunghaft ansteigt. Um hingegen eine ausreichende Wasserstoff Speicherdichte zu erhalten, muss dieser auf Drücke weit über 200 bar komprimiert werden.

Ein Überblick über mögliche Kosten und Gewicht der für den thermochemischen Wärmespeicher benötigten Komponenten ist in der folgenden Tabelle wiedergegeben.

| **Komponente** | **Gewicht** | **Kosten** | **Bemerkung** |
|---|---|---|---|
| Magnesiumnitrid | 5,4 kg | ca. 15 € | Magnesium kostet ca. 2€/kg |
| Ammoniak | 3,6 kg | ca. 5 € | Ammoniak kostet ca. 1€/kg |
| Feststofftank | 3-5 kg | ca. 200€ | Schätzwerte |
| Wärmetauscher | 3-5 kg | ca. 100€ | Schätzwerte |
| Drucktank | 3-5 kg | ca. 200€ | Schätzwerte |
| *Summe* | *18-24 kg* | *ca. 500€* | |

Damit lässt sich ein relativ leichter thermochemischer Wärmespeicher für ein Kraftfahrzeug realisieren. Weiter ermöglicht diese Erfindung insbesondere die $CO_2$-freie Heizung von Wohnhäusern.

Die Zeichnungen stellen zwei Ausführungsbeispiele der Erfindung dar und zeigen:

Fig. 1 schematisch ein Heizsystem mit einem thermochemischen Wärmespeicher, einer externen Energiequelle und einer Energieabgabeeinrichtung und

Fig. 2 schematisch die Anwendung einer weiteren Ausführungsform eines Heizsystems in einem Gebäude.

Fig. 1 zeigt schematisch ein Heizsystem 1 mit einem thermochemischen Wärmespeicher 2, einer externe Energiequelle 3 und einer Energieabgabeeinrichtung 4. Der thermochemische Wärmespeicher 2 umfasst ein erstes Behältnis 5, ein zweites Behältnis 6 und eine Leitung oder ein Leitungssystem 7, welche(s) die beiden Behältnisse 5, 6 fluidisch verbindet. Weiter umfasst der thermochemische Wärmespeicher 2 eine Födereinrichtung (nicht dargestellt) und eine Ventileinrichtung 8.

In dem ersten Behältnis 5 befindet sich eine erste und/oder eine dritte Substanz. In dem zweiten Behältnis 6 befindet sich eine zweite Substanz, insbesondere Ammoniak. Das erste Behältnis 5 ist als Feststofftank ausgebildet

und für eine exotherme Reaktion und eine endotherme Reaktion der in dem ersten Behältnis 5 befindlichen ersten Verbindung oder Substanz und/oder dritten Verbindung oder Substanz ausgebildet. Der Feststofftank weist ein entsprechendes Volumen, beispielsweise von 2l und/oder für 5,3 kg der ersten und/oder dritten Substanz auf. Die endotherme Reaktion erzeugt durch Wärmezufuhr aus der dritten Substanz die zweite und die erste Substanz. Die erste Substanz ist $Mg_3N_2$. Die zweite Substanz ist $NH_3$. Die dritte Substanz ist $Mg(NH_2)_2$.

Die Wärmezufuhr erfolgt über die externe Energiequelle 3. Diese ist in Fig. 1 als Abgasstrang eines Kraftfahrzeugs ausgebildet. Die Energiequelle 3 leitet die Wärme eines durch den Abgasstrang strömenden Abgases an das erste Behältnis 5 weiter. Dieses geschieht im vorliegenden Falle über einen Wärmetauscher (nicht dargestellt), welcher in dem ersten Behältnis 5 oder in der Energiequelle 3 integriert ist. Über die zu dem ersten Behältnis 1 zugeführte Wärme wird in dem Feststoffbehälter befindliches Magnesiumamid, d. h. die dritte Verbindung, auf eine entsprechende Reaktionstemperatur erwärmt. Diese Reaktionstemperatur liegt für die dritte Verbindung bei über 284°C. Durch das Erwärmen zersetzt sich das Magnesiumamid. Dabei wird zum einen Magnesiumnitrid gebildet. Zum anderen wird hierdurch Ammoniak, d. h. die zweite Verbindung, freigesetzt, welches über die Ventileinrichtung 8 in das zweite Behältnis 6 strömt. Hierbei kühlt sich das Ammoniak ab und geht von einer gasförmigen in eine flüssige Phase über. Um das flüssige Ammoniak in dem zweiten Behältnis 6 zu speichern, wird die Ventileinrichtung 8 geschlossen. Der thermochemische Speicher 2 speichert so die extern gewonnene Energie, d. h. Wärme.

Um die gespeicherte Wärme an eine Energieabgabeeinrichtung 4 abzugeben, wird die Ventileinrichtung 8 geöffnet. In Fig. 1 ist die Energieabgabeeinrichtung 4 als Heizung, beispielsweise eine Standheizung für den Innenraum eines Kraftfahrzeugs oder als Motorheizung, ausgebildet. Die Abgabe von Wärme wird schematisch durch den Pfeil bei Bezugszeichen 4 dargestellt. Wenn die Ventileinrichtung 8 geöffnet wird strömt das Ammoniak aus dem zweiten Behältnis 6 durch das Leitungssystem 7 in das erste Behältnis 5 und reagiert mit der in dem ersten Behältnis 5 befindlichen Substanz, insbesondere mit dem in dem Behältnis 5 befindlichen Magnesiumnitrid. Dabei werden Magnesiumamid und Wärme erzeugt. Die freiwerdende Wärme wird über einen Wärmetauscher, der in dem ersten Behältnis 5 oder in der Energieabgabeeinrichtung 4 integriert ist, über die Energieabgabeeinrichtung 4 abgegeben.

Fig. 2 zeigt schematisch die Anwendung einer weiteren Ausführungsform eines Heizsystems 1 in einem Gebäude 9. Das Heizsystem 1 umfasst einen thermochemischen Wärmespeicher 2. Der thermochemische Wärmespeicher 2 umfasst analog zu Fig. 1 ein erstes Behältnis 5 und ein zweites Behältnis 6. In dem ersten Behältnis 5 ist die erste und/oder die dritte Verbindung gespeichert, in dem zweiten Behältnis 6 ist die zweite Verbindung gespeichert. Die erste Verbindung ist vorzugsweise $Mg_3N_2$. Die zweite Verbindung ist $NH_3$. Die dritte Verbindung ist dann $Mg(NH_2)_2$. Die Behältnisse 5, 6 sind über ein Leitungssystem 7 miteinander fluidisch verbunden. In dem Leitungssystem 7 ist eine Fördereinrichtung 10 zum Weiterleiten einer Verbindung von einem Behältnis 5,6 in das andere Behältnis 6,5 vorgesehen. Die Fördereinrichtung 10 kann als Pumpe, Verdichter und dergleichen ausgebildet sein, wobei die Förderrichtung 10 unidirektional oder bidirektional ausgebildet sein kann. darüber hinaus kann die Fördereinrichtung 10 eine Ventileinrichtung (hier nicht dargestellt) umfassen.

Weiter umfasst das Heizsystem 1 eine Energiequelle 3, die als Solarkollektor ausgebildet ist, und eine Energieabgabeeinrichtung 4, die als Heizkörper ausgebildet ist. Über den Solarkollektor wird Wärme aus der Sonnenstrahlung absorbiert und über einen Wärmetauscher 11, der in einem Wärmeleitungssystem 12 oder in dem ersten Behältnis 5 integriert sein kann, zu dem ersten Behältnis 5 transportiert. Hierzu läuft in dem Wärmeleitungssystem 12 ein Wärmeträger, beispielsweise ein Fluid wie Wasser um. Über diesen Wärmeträger wird die absorbierte Wärme über den Wärmetauscher 11 an die in dem ersten Behältnis 5 befindliche dritte Substanz abgegeben. Über die bekannte Reaktion (siehe Beschreibung zu Fig. 1) wird die dritte Substanz in die erste und die zweite Substanz unter Aufnahme von Wärme gespalten und das so erhaltene Ammoniak gespeichert, wodurch das Ammoniak als Wärmespeicher dient. Die durch das Ammoniak gespeicherte Wärme wird ebenfalls analog zu dem in Fig. 1 beschriebenen Vorgang abgerufen. Die in dem ersten Behältnis 5 frei werdende Wärme wird über den Wärmetauscher 11 auf den Wärmeträger in dem Wärmeleitungssystem 12 übertragen und über eine als Heizkörper ausgebildete Energieabgabeeinrichtung 4 abgegeben. Das Gebäude 9, in dem das Heizsystem 1 angewendet wird, ist als Wohnhaus ausgebildet. Um einen ausreichenden Wärmehaushalt für das Gebäude 9 bereitzustellen, wird eine ausreichende Menge an Ammoniak benötigt. Entsprechend groß ist das zweite Behältnis 6 auszubilden. Das zweite Behältnis 6 ist deshalb außerhalb des Gebäudes 9, beispielsweise in einem Garten angeordnet, bevorzugt unterirdisch. Damit das zweite Behältnis 6 möglichst klein baut, wird das Ammoniak vor dem Einlassen in das zweite Behältnis 6 komprimiert. Das heißt, durch die Fördereinrichtung 10 wird das Ammoniak druckbeaufschlagt, wodurch es sich verflüssigt. Das flüssige Ammoniak in dem als Drucktank ausgebildeten zweiten Behältnis 6 weist etwa einen Druck von 8,5 bar bei 20°C auf.

## Patentansprüche

1. Thermochemischer Wärmespeicher (2), mit einer in einem ersten Behältnis (5) befindlichen ersten Verbindung und mit einer in einem zweiten Behältnis (6) befindlichen zweiten Verbindung, wobei durch eine exotherme Reaktion

der ersten Verbindung mit der zweiten Verbindung unter Bildung einer dritten Verbindung Wärmeenergie freisetzbar ist und wobei durch Einbringen von Wärmeenergie in die dritte Verbindung durch eine endotherme Reaktion die erste und die zweite Verbindung reversibel herstellbar sind, **dadurch gekennzeichnet, dass** die erste Verbindung ein Nitrid mindestens eines Elements der ersten und/oder zweiten Hauptgruppe des Periodensystems und die zweite Verbindung Ammoniak ($NH_3$) ist.

**2.** Wärmespeicher (2) nach Anspruch 1, **dadurch gekennzeichnet, dass** die erste Verbindung Magnesiumnitrid ($Mg_3N_2$), ist.

**3.** Wärmespeicher (2) nach Anspruch 1 oder 2, **dadurch gekennzeichnet, dass** das erste Behältnis (5) für die exotherme und die endotherme Reaktion vorgesehen ist.

**4.** Wärmespeicher (2) nach einem der Ansprüche 1 bis 3, **dadurch gekennzeichnet, dass** das erste Behältnis (5) ein Feststofftank.

**5.** Wärmespeicher (2) nach einem der Ansprüche 1 bis 4, **dadurch gekennzeichnet, dass** das zweite Behältnis (6) ein Drucktank ist.

**6.** Wärmespeicher (2) nach einem der Ansprüche 1 bis 5, **dadurch gekennzeichnet, dass** zwischen dem ersten Behältnis (5) und dem zweiten Behältnis (6) wenigstens eine Fördereinrichtung (40) vorgesehen ist.

**7.** Wärmespeicher (2) nach Anspruch 6, **dadurch gekennzeichnet, dass** die Fördereinrichtung (10) eine Verdichterpumpe ist.

**8.** Wärmespeicher (2) nach einem der Ansprüche 1 bis 7, **dadurch gekennzeichnet, dass** an und/oder in dem ersten Behältnis (5) wenigstens ein Wärmetauscher (11) vorgesehen ist, welcher derart ausgebildet ist, dass er zum Entnehmen von Wärmeenergie aus dem Speicher (2) in dem ersten Behältnis (5) entstehende Wärmeenergie nach außen abgibt und/oder er zum Speichern von Wärmeenergie in dem Speicher (2) außerhalb entstehende Wärmeenergie durch Aufnahme von Strahlungs- oder Konvektionswärme in das erste Behältnis (5) einbringt.

**9.** Heizsystem (1) mit einem thermochemischen Wärmespeicher (2) nach einem der Ansprüche 1 bis 8.

**10.** Heizsystem (1) nach Anspruch 9, **dadurch gekennzeichnet, dass** der Wärmetauscher (11) zum Abführen der Wärmeenergie aus dem ersten Behältnis (5) mit wenigstens einer Energieabgabeeinrichtung (4) verbunden und/oder verbindbar ist.

**11.** Heizsystem (1) nach Anspruch 10, **dadurch gekennzeichnet, dass** die Energieabgabeeinrichtung (4) ein Heizkörper ist.

**12.** Heizsystem (1) nach einem der Ansprüche 9 bis 11, **dadurch gekennzeichnet, dass** der Wärmetauscher (11) zum Einbringen von Wärmeenergie in das erste Behältnis (5) mit einer externen Energiequelle (3) verbunden und/oder verbindbar ist.

**13.** Heizsystem (1) nach Anspruch 12, **dadurch gekennzeichnet, dass** die externe Energiequelle (3) ein Solarkollektor ist.

**14.** Heizsystem (1) nach Anspruch 12, **dadurch gekennzeichnet, dass** die externe Energiequelle (3) eine Abgasleitung ist.

**15.** Verwendung eines Heizsystems (1) nach einem der Ansprüche 9 bis 14 in einer Gebäudeheizung.

**16.** Verwendung eines Heizsystems (1) nach einem der Ansprüche 9 bis 14 in einer Standheizung für ein Kraftfahrzeug.

## Claims

**1.** Thermochemical reservoir (2), with a first compound located in a first receptacle (5) and with a second compound located in a second receptacle (6), heat energy being capable of being released as a result of an exothermal reaction

of the first compound with the second compound, with a third compound being formed, and, by heat energy being introduced into the third compound, the first and the second compound being capable of being produced in a reversible way as a result of an endothermal reaction, **characterized in that** the first compound is a nitride of at least one element of the first and/or the second main group of the periodic system, and the second compound is ammonia ($NH_3$).

2. Heat reservoir (2) according to Claim 1, **characterized in that** the first compound is magnesium nitride ($Mg_3N_2$).

3. Heat reservoir (2) according to Claim 1 or 2, **characterized in that** the first receptacle (5) is provided for the exothermal and the endothermal reaction.

4. Heat reservoir (2) according to one of Claims 1 to 3, **characterized in that** the first receptacle (5) is a solids tank.

5. Heat reservoir (2) according to one of Claims 1 to 4, **characterized in that** the second receptacle (6) is a pressure tank.

6. Heat reservoir (2) according to one of Claims 1 to 5, **characterized in that** at least one conveying device (10) is provided between the first receptacle (5) and the second receptacle (6).

7. Heat reservoir (2) according to Claim 6, **characterized in that** the conveying device (10) is a compressor pump.

8. Heat reservoir (2) according to one of Claims 1 to 7, **characterized in that**, on and/or in the first receptacle (5), at least one heat exchanger (11) is provided, which is designed in such a way that, for the extraction of heat energy from the reservoir (2), it discharges outwards heat energy occurring in the first receptacle (5) and/or, for the storage of heat energy in the reservoir (2), it introduces heat energy occurring outside into the first receptacle (5) by the absorption of radiant or convective heat.

9. Heating system (1) having a thermochemical heat reservoir (2) according to one of Claims 1 to 8.

10. Heating system (1) according to Claim 9, **characterized in that**, to discharge the heat energy from the first receptacle (5), the heat exchanger (11) is connected and/or connectable to at least one energy emission device (4).

11. Heating system (1) according to Claim 10, **characterized in that** the energy emission device (4) is a heating body.

12. Heating system (1) according to one of Claims 9 to 11, **characterized in that**, to introduce heat energy into the first receptacle (5), the heat exchanger (11) is connected and/or connectable to an external energy source (3).

13. Heating system (1) according to Claim 12, **characterized in that** the external energy source (3) is a solar collector.

14. Heating system (1) according to Claim 12, **characterized in that** the external energy source (3) is an exhaust gas line.

15. Use of a heating system (1) according to one of Claims 9 to 14 in building heating.

16. Use of a heating system (1) according to one of Claims 9 to 14 in auxiliary heating for a motor vehicle.

## Revendications

1. Accumulateur de chaleur thermochimique (2), avec un premier composé se trouvant dans un premier récipient (5) et avec un deuxième composé se trouvant dans un deuxième récipient (6), dans lequel de l'énergie thermique peut être dégagée par une réaction exothermique du premier composé avec le deuxième composé avec formation d'un troisième composé et dans lequel le premier composé et le deuxième composé peuvent être produits de façon réversible par une réaction endothermique par apport d'énergie thermique au troisième composé, **caractérisé en ce que** le premier composé est un nitrure d'au moins un élément du premier groupe principal et/ou du deuxième groupe principal du système périodique et le deuxième composé est l'ammoniac ($NH_3$) .

2. Accumulateur de chaleur (2) selon la revendication 1, **caractérisé en ce que** le premier composé est le nitrure de magnésium ($Mg_3N_2$) .

3. Accumulateur de chaleur (2) selon la revendication 1 ou 2, **caractérisé en ce que** le premier récipient (5) est prévu pour la réaction exothermique et la réaction endothermique.

4. Accumulateur de chaleur (2) selon l'une quelconque des revendications 1 à 3, **caractérisé en ce que** le premier récipient (5) est un réservoir à substance solide.

5. Accumulateur de chaleur (2) selon l'une quelconque des revendications 1 à 4, **caractérisé en ce que** le deuxième récipient (6) est un réservoir sous pression.

6. Accumulateur de chaleur (2) selon l'une quelconque des revendications 1 à 5, **caractérisé en ce qu'**il est prévu au moins un dispositif de transport (10) entre le premier récipient (5) et le deuxième récipient (6).

7. Accumulateur de chaleur (2) selon la revendication 6, **caractérisé en ce que** le dispositif de transport (10) est une pompe de compresseur.

8. Accumulateur de chaleur (2) selon l'une quelconque des revendications 1 à 7, **caractérisé en ce qu'**il est prévu sur et/ou dans le premier récipient (5) au moins un échangeur de chaleur (11), qui est configuré de telle manière que, pour prélever de l'énergie thermique hors der l'accumulateur (2), il délivre vers l'extérieur de l'énergie thermique produite dans le premier récipient (5) et/ou, pour accumuler de l'énergie thermique dans l'accumulateur (2), il introduit dans le premier récipient (5), par réception de chaleur de rayonnement ou de convection, de l'énergie thermique produite à l'extérieur.

9. Système de chauffage (1) avec un accumulateur de chaleur (2) selon l'une quelconque des revendications 1 à 8.

10. Système de chauffage (1) selon la revendication 9, **caractérisé en ce que** l'échangeur de chaleur (11) est et/ou peut être raccordé à au moins un dispositif de dissipation d'énergie (4) pour évacuer de l'énergie thermique hors du premier récipient (5).

11. Système de chauffage (1) selon la revendication 10, **caractérisé en ce que** le dispositif de dissipation d'énergie (4) est un corps de chauffage.

12. Système de chauffage (1) selon l'une quelconque des revendications 9 à 11, **caractérisé en ce que** l'échangeur de chaleur (11) est et/ou peut être raccordé à une source d'énergie extérieure (3) pour apporter de l'énergie thermique dans le premier récipient (5).

13. Système de chauffage (1) selon la revendication 12, **caractérisé en ce que** la source d'énergie extérieure (3) est un capteur solaire.

14. Système de chauffage (1) selon la revendication 12, **caractérisé en ce que** la source d'énergie extérieure (3) est une conduite de gaz d'échappement.

15. Utilisation d'un système de chauffage (1) selon l'une quelconque des revendications 9 à 14 dans un chauffage de bâtiment.

16. Utilisation d'un système de chauffage (1) selon l'une quelconque des revendications 9 à 14 dans un chauffage auxiliaire pour un véhicule automobile.

Fig. 1

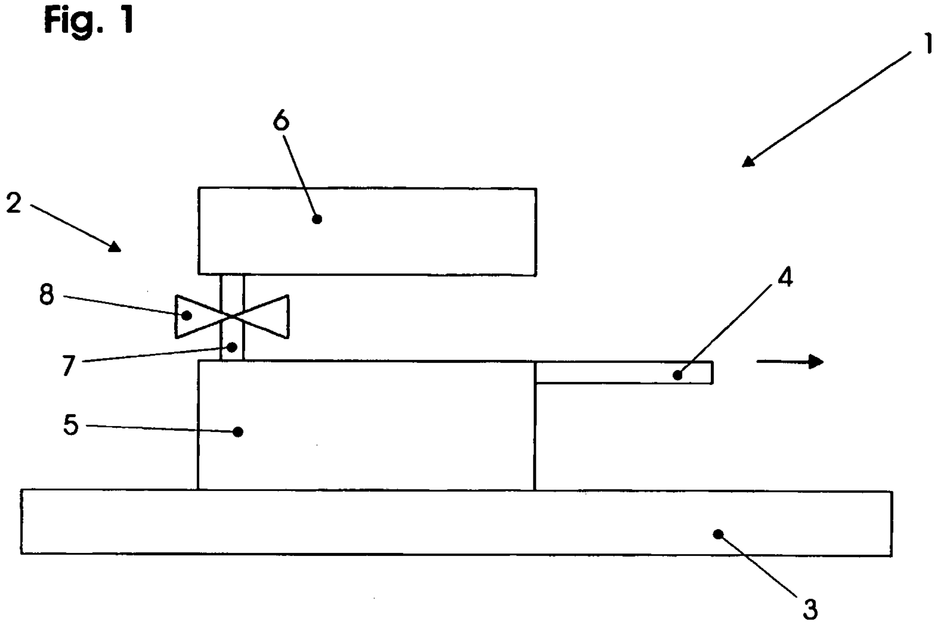


Fig. 2

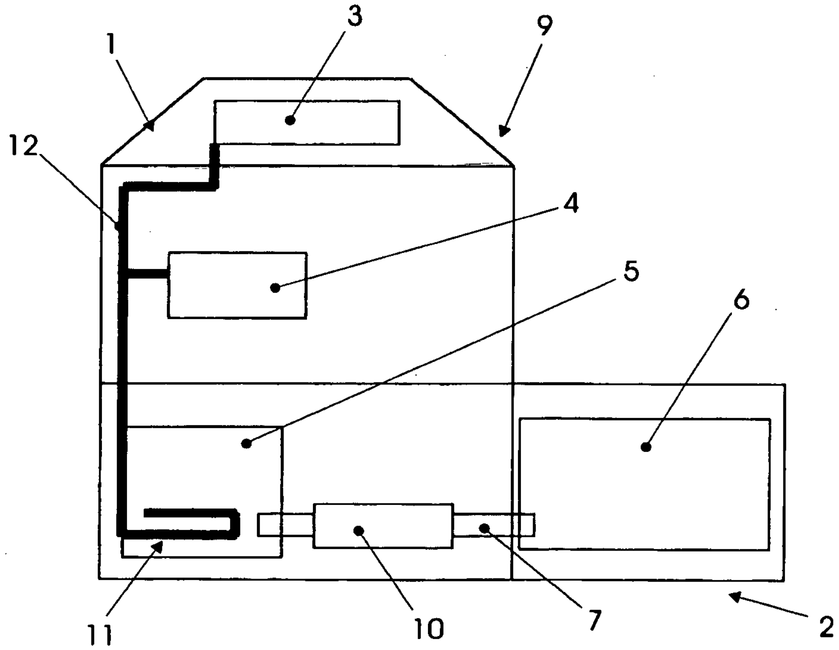

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- FR 2705622 A1

### In der Beschreibung aufgeführte Nicht-Patentliteratur


- **HU, J. ; WU, G. ; LIU, Y. ; XIONG, Z. ; CHEN, P. ; MURATA, K. ; SAKATA, K. ; WOLF, G.** Hydrogen Release from Mg(NH2)2-MgH2 through Mechanochemical Reaction. *J. Phys. Chem. B.,* 2006, vol. 110 (30), 14688-14692